# EUROPEAN PATENT SPECIFICATION

(11) **EP 1 893 466 B1**
(45) Date of publication and mention of the grant of the patent: **05.08.2009**
(21) Application number: 06747942.8
(22) Date of filing: 19.06.2006
(51) Int. Cl.: B62D 5/07, B62K 21/08

(54) **ARRANGEMENT FOR MOTORCYCLE**
ANORDNUNG FÜR MOTORRAD
AGENCEMENT POUR MOTO

(30) Priority: 20.06.2005 SE 0501416
(43) Date of publication of application: 05.03.2008
(73) Proprietor: ÖHLINS RACING AB, 194 27 Upplands Väsby (SE)
(72) Inventor: GUSTAFSSON, Leif, S-370 34 Holmsjö (SE)
(74) Representative: Schwarze, Holm
(86) International application number: PCT/SE2006/000751
(87) International publication number: WO 2006/137788

(56) References cited:
- EP-A- 0 900 722
- EP-A2- 1 248 013
- EP-A2- 1 291 276
- WO-A1-03/070554
- DE-A1- 3 221 741
- GB-A- 2 030 531
- JP-A- 4 011 573
- JP-A- 01 103 592
- US-A- 5 076 383
- US-A- 5 894 903
- US-A- 6 129 111
- US-A1- 2003 051 937
- US-A1- 2004 099 470

## Description

The present invention relates to an arrangement for motorcycles that, in association with steering, require a reduction in the steering force, where a handlebar is arranged to be rotated around a center of rotation by means of a steering force and where damping devices that are operated by a damping medium are arranged to take up movement that is transmitted to the handlebar as a result of unevenness in the surface upon which the motorcycle is being driven.

Reference is made in particular to motorcycles with two-wheel drive and heavy motorcycles that are heavy to steer in certain driving situations. By heavy motorcycles is meant motorcycles weighing 400 kg or more. With, for example motorcycles with two-wheel drive (that is both rear and front wheel drive) the driving characteristics are different to those of more traditional motorcycles. On severe bends, the front wheel trail has the result that large manual counter forces must be applied on the wheel on account of the turning force that arises as a result of the trail. Also, in general, it is necessary to use large manual steering forces (also deflection forces) for the said motorcycles with two-wheel drive. It is also the case that large or heavy motorcycles require relatively large manual steering forces in certain driving situations.

Motorcycles with two-wheel drive are already known by, among other things, patent applications submitted by the applicant of the present application, see for example WO 03070554 and PCT/SE2004/001782. Heavy motorcycles are to be found in abundance on the open market.

An arrangement for motorcycles according to the preamble of claim 1 is disclosed in JP4-11573.

There is, in general, a need to be able to improve the steering function on motorcycles and similar vehicles. The main object of the present invention is to solve this problem, not only for the motorcycles mentioned, but also, in general, for motorcycles where there can be a desire to have this new facility. There is also a desire to be able to integrate the new function with existing components on the motorcycle or vehicle. The invention also solves this problem and, in an embodiment, proposes close interaction with existing damping devices on the vehicle. In the case of two-wheel drive motorcycles with hydraulic front wheel drive, there is already the use of a hydraulic unit that can be utilized as a power source for the servo function in question. Power sources that comprise or operate with electrical energy can, however, also be utilized in accordance with the invention. There is also a desire to be able to increase the acceleration and to maintain this for a long time, even when the surface upon which the vehicle is being driven is very uneven, with the result that conventional arrangements with such increased acceleration are impossible. Tests have shown that reductions in engine speed from, for example, 37 seconds to 35 seconds with motorcycles that utilize the invention.

These objects are achieved by an arrangement for motorcycles according to claim 1. In a plurality of embodiments, it is also described how this arrangement interacts with and is mounted in relation to vehicle-specific components, such as, for example, front fork, handlebar and frame, in order to be able to utilize the advantages of the arrangement to the full.

In an embodiment, the said servo function contains a device, by means of which the servo function can be actuated by initial turning of the handlebar. The device is connected to a hydraulic unit comprised in the motorcycle that delivers hydraulic pressure or hydraulic medium pressure that assists in the deflection or countering. The arrangement comprises a valve for determining the direction of the hydraulic oil for effecting the deflection or countering. In an embodiment, the damping device can consist of a blade damper. Other types of damping device are, however, possible, for example damping devices that are based on cylinders and pistons. In a further development of the concept of the invention, a hydraulic valve can also be included, the longitudinal axis of which extends along the axis of rotation of the handlebar. The hydraulic valve is arranged to be caused to rotate around its longitudinal axis after a predetermined initial rotational movement of the handlebar. A countering device can be arranged to determine the size of the initial movement.

Additional further developments of the concept of the invention are apparent from the following subsidiary claims.

By means of what is proposed in the above, a technically advantageous construction, function and assembly of the servo function can be obtained. Existing components on the motorcycle can be utilized for the servo function as well as for their original function and thus, for example, a blade damper function can easily be modified for servo steering and the blade damper can be connected to the hydraulic valve in a very simple way. A currently proposed embodiment of an arrangement that has the significant characteristics of the invention will be described below, with reference to the attached drawings, in which
Figure 1 shows in vertical view, parts of the front parts of a motorcycle, and a servo function arranged in association with these,
Figure 1a shows in vertical view, a second embodiment of the front parts of the motorcycle, showing certain parts in cross section,
Figure 1b shows in a section, view A-A, the steering column of the motorcycle in cross section,
Figure 2 shows in horizontal view, parts of the motorcycle and blade damper device arranged on this and shows in outline the control device and hydraulic unit,
Figure 3 shows in horizontal view, an alternative embodiment of the embodiment according to Figure 2,
Figure 4 shows in horizontal view, parts of components according to Figure 1,
Figure 5 shows in horizontal view, a function stage that is different to the function stage according to Figure 4 for the parts in question,

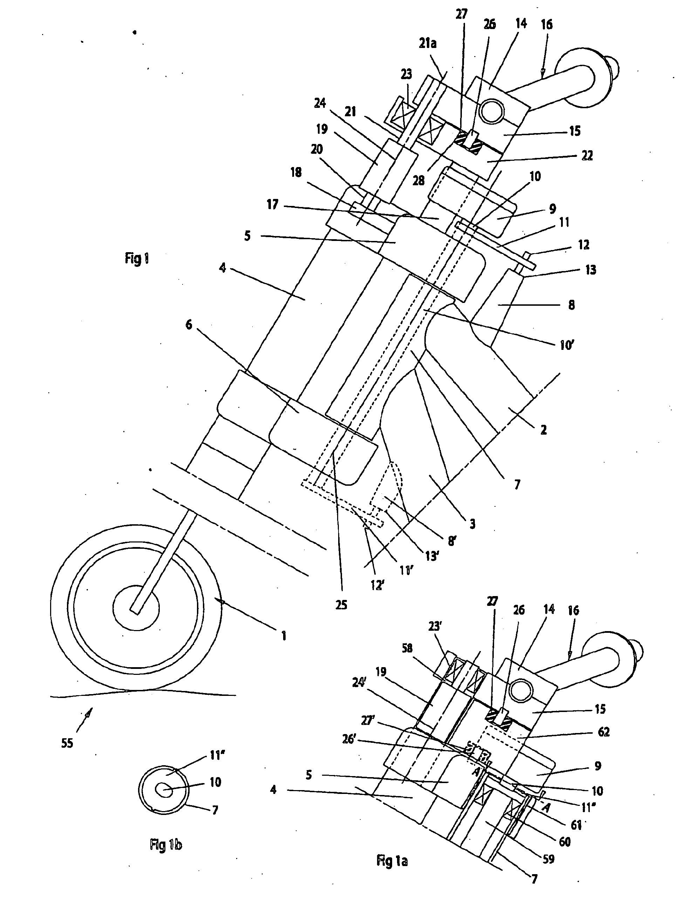

In Figure 1, a front wheel on a motorcycle is indicated by 1. The frame of the motorcycle is indicated in outline by the frame parts 2 and 3. The front fork of the motorcycle is indicated by 4 and an upper and a lower fork crown are indicated by 5 and 6 respectively. The ends of the frame parts 2 and 3 are attached to a steering column 7. The front wheel 1 can be steered around an axis of rotation 25 that extends through the center of the steering column 7. The upper frame part is provided with a bracket 8. A damping device, in the form of a blade damper, is indicated by 9. A blade for the blade damper, that is not shown in Figure 1, is connected to a bearing shaft 10, that has a center of rotation that coincides with the axis of rotation 25 and is attached to a part 11 that tapers outwards from the damper. This part is mounted on a pin 12 that extends out from the free end 13 of the bracket 8. The arrangement also shows upper and lower mountings 14 and 15 respectively for a handlebar 16. The upper and lower handlebar mountings are connected to the upper part of the fork crown, by means of fixing parts 17, one of which is shown in Figure 1. The upper fork crown is provided with a mounting 18, upon which a hydraulic valve 19 is mounted. The hydraulic valve has a first shaft section 20, by means of which the valve is fixed in the mounting 18. The hydraulic valve is also provided with a second shaft section 21. The handlebar mountings 14 and 15 are also attached to a bearing mounting 22, that is attached, together with the handlebar mountings, to the upper fork crown via the said bearing parts 17. The handlebar mounting 15 and the bearing mounting 22 are in contact with each other and the handlebar mountings 14 and 15 clamp around the handlebar 16 and give this a fixed position in relation to the horizontal part of the handlebar. The bearing mounting is provided with a bearing 23 for the said shaft 21 of the hydraulic valve. The hydraulic valve shaft 21 extends through the bearing 23 and its outer parts 21a are attached to the lower handlebar mounting 15. The mountings 14 and 15 that hold the handlebar 16 are arranged to be able to rotate in relation to the bearing mounting 22. In the event of rotation between the handlebar mountings and the bearing mounting, the longitudinal shaft 21, 21a of the hydraulic valve is rotated around the central axis 24 of the hydraulic valve and gives an angle of rotation α between the shaft sections 20 and 21.

The hydraulic valve is thereby arranged to control or affect the flow of medium for the damping device 9, in accordance with what is described below. The said effect is initiated after an initial rotational movement of the handlebar. The size of this initial rotational movement can be determined by means of a device or pin 26 arranged in the lower handlebar mounting that extends downwards and interacts with a countering device 27 in the bearing mounting that is arranged with a space for the countering device. The countering device can consist of a rubber ring, a spring arrangement, a torsion spring, etc. In one embodiment, the ring is made of expanded polyurethane.

Figure 1 also shows by broken lines an alternative assembly of the arrangement. In this embodiment, the outgoing bearing shaft 10' of the damping device 9 is extended so that it extends through and terminates outside the lower end of the steering column 7. A part 11' is attached to the lower end of the extended shaft 10. This part 11' is mounted on a pin 12' that projects out from the free end 13' of a bracket 8'. The bracket 8' is attached to the lower frame section 3 and the whole arrangement thus works in the same way as has been described above.

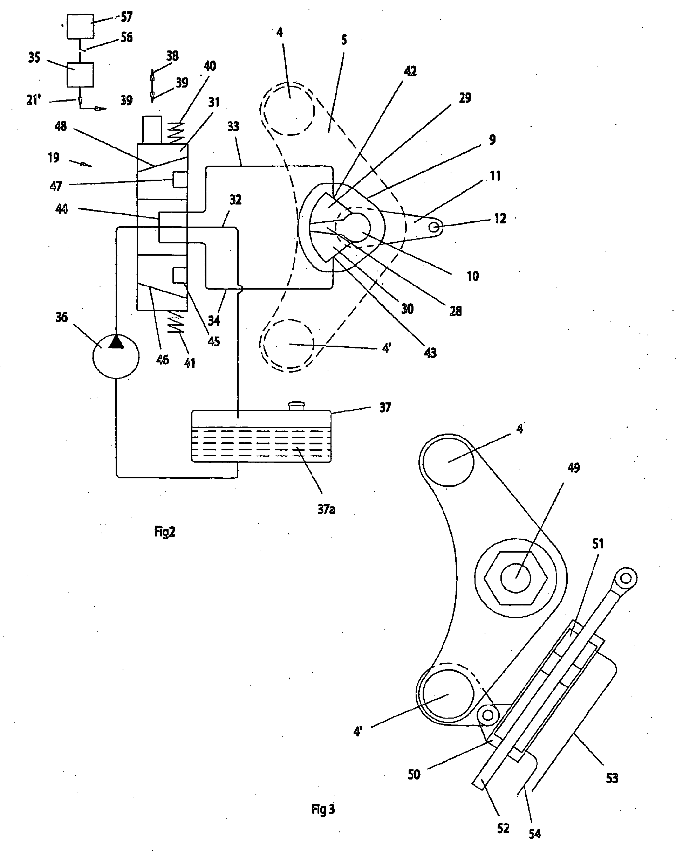

Figure 2 shows the upper fork crown 5 with the said parts 4, 4'. In addition, it shows the position of the damping device 9 and the device 11 and the pin 12. The shaft 10 of the blade damper is also shown. The blade is indicated by 28 and the space in which the blade operates is indicated by the partial spaces 29 and 30 on both sides of the blade. The function of the hydraulic valve 19 can, in accordance with known hydraulic technology, be considered to comprise a slide 31 that can move in a longitudinal direction and can assume three different longitudinally displaced positions in relation to hydraulic pipes 32, 33 and 34. The longitudinally displaced position for the slide is controlled by an electrical signal i1 that is obtained from an electrical control device 35. The effect on the slide caused by the said electrical signal is only indicated symbolically. In the case illustrated, the slide assumes its middle position. The hydraulic valve is provided with a pressure-generating part 36 and a return part or a reservoir 37. The movement of the slide from the middle position shown in Figure 2 to each end position is symbolized by arrows 38 and 39. As a result of the effect being caused by the signal i1 in either direction, the effect continues as long as the signal is maintained, and, when the signal ceases, the slide assumes its middle position due to the action of the return springs 40 and 41. The hydraulic pipe is connected to the partial space 29 via a connector 42. In a corresponding way, the hydraulic pipe 34 is connected to the partial space 30 via a connector 43.

In Figure 2, the hydraulic valve assumes its middle position as long as the handlebar is not moved and the initial movement of the handlebar does not exceed a predetermined size. In this position, the partial spaces 29 and 30 are connected to each other via the hydraulic pipes 33 and 34 and a duct 44 in the slide, when the slide is in its middle position. In this position, the damping device can work completely independently of the servo function and carry out its damping function via damping devices, for example in the form of holes, shims, etc, arranged in the damper. The function of the blade damper is already well known and will therefore not be described in greater detail here. In this position, the pressure-generating device 36 is connected directly to the reservoir 37.

The slide has a part with first ducts 45, 46. When the handlebar is turned in either direction, the slide 31 assumes the relevant end position, with the result that these ducts are aligned with the ducts 32, 33 and 34. The pressurizing device 36 will thereby be connected to the second partial space 30 in the blade damper via the duct 46. The duct 33 will be connected to the reservoir via the duct 45, which means that the partial space 29 is also connected to the reservoir. The damping function of the blade damper is thereby completely or partially inoperative and the pressure-generating device 36 can be allowed to affect the pressure in the partial space 30 and move the blade so that this assists in the servo function. In the event of movement of the blade in its space, medium is led from the second partial space 20 to the reservoir. When the slide assumes the second position where the duct parts 47 and 48 are aligned with the pipes 32, 33 and 34, the pressurizing device 36 is connected in a corresponding way to the partial space 29 and the partial space 30 is connected to the reservoir 37.

Figure 3 shows in outline a case where a different type of damping device is utilized. In Figure 3, the parts 4, 4' are shown, and also the center of rotation 49 of the fork crown. In this case, a damper is utilized with a cylinder 50, in which a piston 51 operates. A piston rod is indicated by 52 and connecting pipes from the hydraulic valve (corresponding to the pipes 33 and 34 in Figure 2) are indicated by 53 and 54.

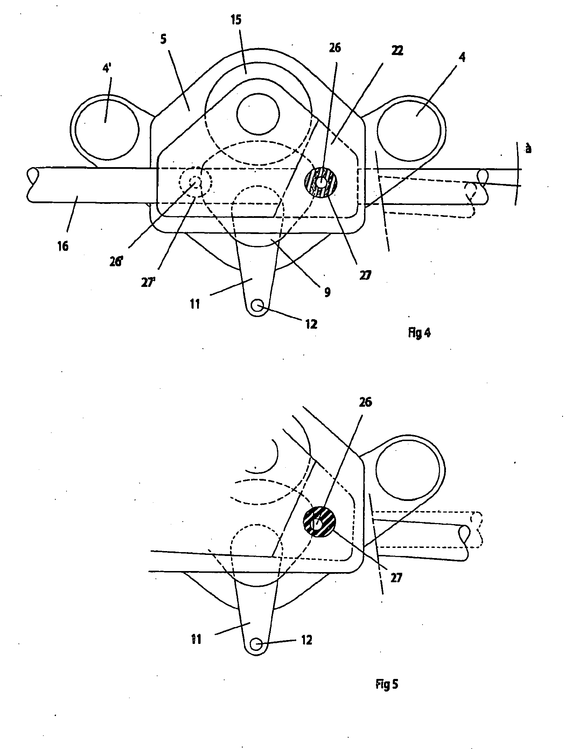

Figures 4 and 5 show the equipment illustrated in Figure 1 viewed from above and in partial cross section. As is shown in Figure 4, it comprises two countering devices 27 and 27' that are located at a distance from each other. The countering devices and the pin have the same construction. When the handlebar 16 assumes its neutral position as far as steering deflection is concerned, the pins 26 and 26' are located in the center of the relevant rings or the like. Figure 4 also shows the parts 5, 4, 4' and 15 and the part 11 and the pin 12. Similarly, it shows the position of the blade damper 9 in relation to the other parts in the view in question. When the handlebar is given a deflection α that exceeds a particular value, the signal transmission according to Figure 2 commences, that is the signal i1 commences and acts upon the medium for the damper via adjustment of the slide 31 in the hydraulic valve.

Figure 5 shows the case when an initial movement of predetermined size has occurred, which means that the pin 26 has moved from its central position according to Figure 4. This effect results in the adjustment of the slide 31 to the relevant end position described above. As a result of the pressure-generating device 36 being connected to one side of the blade 43 and, at the same time, the medium in the partial space on the other side of the blade being led away, a steering function can be obtained that can be added to the manual steering force. The servo function that is obtained in this way thus participates in the deflecting or countering function and it is possible to obtain a reduction in the manual steering force that is required. In Figure 2, a medium used in the system, for example hydraulic oil with any additives, is indicated by 37a. The motorcycle can be driven over uneven surfaces that are symbolized by 55 in Figure 1. In Figure 2, a switch for connecting in the servo function is indicated in outline by 56. A battery power source is indicated by 57. The pressure-generating device 36 acts upon the relevant side of the blade or piston in response to the hydraulic medium pressure that is generated by the hydraulic unit. This generation of pressure can be dependent upon the driving speed, which has advantages as far as function of the servo system is concerned. At speeds where it is necessary to add servo force to the manually-applied steering force, the servo function is more active, and vice versa.

Figure 1a shows parts of the arrangement in cross section, with the construction of the steering column 7 being illustrated in particular. The damping device, in this case in the form of a blade damper, is indicated by 9 and its outgoing shaft by 10, where the axis of rotation of the outgoing shaft 10 coincides with or essentially coincides with the axis of rotation 25. An upper fork crown is indicated by 5 and the arrangement also shows upper and lower mountings 14 and 15 respectively for a handlebar 16.

The steering column 7, the fork leg 4 and an outer casing 58 for the hydraulic valve 19' are attached to the upper fork crown 5. A bearing 23' is incorporated inside the outer casing 58, which bearing enables the hydraulic valve 19' to rotate around its axis of rotation 24' and enables there to be an angle of rotation α between the incoming and outgoing shafts of the hydraulic valve. A steering shaft 59 is arranged in the steering column 7. This steering shaft 59 is mounted at its upper and lower part by bearings 60 to the outer casing of the steering column 7 or a sleeve (not shown). The upper fork crown 5 is, in turn, mounted by a bearing 61 to the upper part of the outer casing of the steering column 7 or the sleeve, so that the front wheel of the motorcycle turns in conjunction with the rotation of the handlebar (16).

The device has also two support devices 62 (only one of which is shown), placed symmetrically around the central axis, which join together the upper fork crown 5 and the lower handlebar mounting 15. Devices or pins 26, 26' are arranged between these support devices 62 and the fork crown 5 or the lower handlebar mounting 15, that determine the initial rotational movement of the handlebar. The pins 26, 26' extend down into and interact with the countering devices 27, 27' that are arranged in corresponding parts in the fork crown 5 or the lower handlebar mounting 15. The pins 26, 26' and the countering devices 27, 27' work together in the same way as described above.

A part 11" is attached in the upper part of the outer casing of the steering column 7 or the sleeve, which part joins together the outgoing shaft 10 of the damping device 9 and the frame parts 2 and 3 that do not rotate when steering takes place, in such a way that the steering movement is damped and the servo effect can be obtained. This part is illustrated in Figure 1b that shows a section A-A through the upper part of the steering column 7.

The hydraulic valve and the assembled devices that are described in the second embodiment can, of course, also be used together with the first embodiment.

The invention is not limited to the embodiments described above as examples, but can be modified within the scope of the following claims.

## Claims

1. An arrangement for motorcycles that, in association with steering, require a reduction in the steering force, where a handlebar (1) is arranged to be rotated around a center of rotation (25) by means of a steering force and where a damping device or devices (9) that are operated by a damping medium (37a) are arranged to take up movement that is transmitted to the handlebar as a result of unevenness in the surface (55) upon which the motorcycle is being driven, where the arrangement is arranged, by means of a hydraulic valve (19, 19'), to cause the damping medium (37a) to effect a servo function that achieves this reduction, **characterized in that** the hydraulic valve (19, 19') is fixed from an upper fork crown (5) via a bearing (23) arranged in a bearing mounting (22) or in an outer casing (58) of the hydraulic valve, to a lower handlebar mounting (15) to which the other end of the hydraulic valve is attached.

2. The arrangement as claimed in claim 1, **characterized in that** the longitudinal axis (24) of the hydraulic valve (19) extends parallel to the axis of rotation (25) and that the hydraulic valve is arranged to be caused to rotate around its longitudinal axis after a predetermined initial rotational movement (α) of the handlebar.

3. The arrangement as claimed in claim 1 or 2, **characterized in that** the damping device (9) is in the form of a blade damper, where a blade (28) connected to the blade damper (9) is connected to a bearing shaft (10) that has a center of rotation that coincides or essentially coincides with the axis of rotation (25) of the front wheel (1) of the motorcycle.

4. The arrangement as claimed in any one of claims 1-3, **characterized in that** the bearing mounting (22) supports a countering device (26, 26') that interacts with an element (27, 27') arranged in the lower handlebar mounting (15), and **in that** the countering device and the element are arranged to determine the size (α) of the initial movement.

5. The arrangement as claimed in any one of claims 1-4, **characterzed in that** two support devices (63a, 63b) join together the upper fork crown (5) and the lower handlebar mounting (15) and devices or pins (26) are arranged between these support devices (63a, 63b) and the fork crown (5) or the lower handlebar mounting (15), which devices or pins (26) extend down in a countering device (27) that is arranged in a corresponding part in the fork crown (5) or the lower handlebar mounting (15) in such a way that interaction of these devices determines the initial rotational movement (α) of the handlebar (16).

6. The arrangement as claimed in any one of claims 1-5, **characterized in that**, in the event of a deflection position larger than an initial position for the connection of the servo function, the hydraulic valve (19) is arranged to completely or partially disconnect the damping function of the damping device.

7. Motorcycle with an arrangement as claimed in any one of claims 1-6, **characterized in that** the motorcycle is arranged for combined rear and front wheel drive with trail between a vertical axis (through the steering axis) in a direction towards the surface of the ground and the point of contact of the front wheel with the surface of the ground, which trail causes a counter turning force in the event of the deflection.

## Patentansprüche

1. Anordnung für Motorräder, die beim Lenken eine Reduktion der Lenkkraft benötigen, wobei ein Lenker (1) mittels einer Lenkkraft um ein Drehzentrum (25) drehbar angeordnet ist, und wobei eine oder mehrere durch ein Dämpfungsmittel (37a) betriebene(n) Dämpfungsvorrichtung(en) (9) zur Aufnahme von aus Unebenheiten des vom Motorrad befahrenen Bodens (55) resultierenden, auf den Lenker übertragenen Bewegungen angeordnet sind, wobei die Anordnung derart angeordnet ist, dass sie mittels eines Hydraulikventils (19, 19') das Dämpfungsmittel (37a) zum Ausführen einer Servofunktion bewegt, die diese Reduktion erzielen kann, **dadurch gekennzeichnet, dass** das Hydraulikventil (19, 19') über ein in einer Lagerhalterung (22) oder in einem Außengehäuse (58) des Hydraulikventils angeordnetes Lager (23) zwischen einer oberen Gabelkrone (5) und einer unteren Lenkerhalterung (15) fixiert ist, an welcher das andere Ende des Hydraulikventils befestigt ist.

2. Anordnung nach Anspruch 1, **dadurch gekennzeichnet, dass** sich die Längsachse (24) des Hydraulikventils (19) parallel zur Drehachse (25) erstreckt, und dass das Hydraulikventil nach einer vorgegebenen einleitenden Drehbewegung (α) des Lenkers um seine Längsachse drehbar angeordnet ist.

3. Anordnung nach Anspruch 1 oder 2, **dadurch gekennzeichnet, dass** das Dämpfungsmittel (9) nach Art eines Blattdämpfers ausgebildet ist, wobei ein mit dem Blattdämpfer (9) verbundenes Blatt (28) mit einer Lagerwelle (10) verbunden ist, die ein mit der Drehachse (25) des Vorderrades (1) des Motorrades zusammenfallendes oder im Wesentlichen zusammenfallendes Drehzentrum aufweist.

4. Anordnung nach einem der Ansprüche 1 bis 3, **dadurch gekennzeichnet, dass** die Lagerhalterung (22) eine Gegenanordnung (26, 26') trägt, die mit einem in der unteren Lenkerhalterung (15) angeordneten Element (27, 27') zusammenwirkt, und dass die Gegenanordnung und das Element derart angeordnet sind, dass sie die Größe (α) der einleitenden Drehbewegung definieren.

5. Anordnung nach einem der Ansprüche 1 bis 4, **dadurch gekennzeichnet, dass** zwei Stützanordnungen (63a, 63b) die obere Gabelkrone (5) und die untere Lenkerhalterung (15) miteinander verbinden, und dass Anordnungen oder Stifte (26) zwischen diesen Stützanordnungen (63a, 63b) und der Gabelkrone (5) oder der unteren Lenkerhalterung (15) angeordnet sind, welche Anordnungen oder Stifte (26) sich in eine Gegenanordnung (27) nach unten erstrecken, die in einem entsprechenden Teil in der Gabelkrone (5) oder der unteren Lenkerhalterung (15) derart angeordnet ist, dass eine Interaktion zwischen diesen Anordnungen die einleitende Drehbewegung (α) des Lenkers (16) definiert.

6. Anordnung nach einem der Ansprüche 1 bis 5, **dadurch gekennzeichnet, dass** das Hydraulikventil (19) im Falle einer Ablenkungsposition, die größer ist als eine Anfangsposition für die Ankopplung der Servofunktion, zum vollständigen oder teilweisen Abschalten der Dämpfungsfunktion der Dämpfungsanordnung angeordnet ist.

7. Motorrad mit einer Anordnung nach einem der Ansprüche 1 bis 6, **dadurch gekennzeichnet, dass** das Motorrad zum kombinierten Hinter- und Vorderradantrieb mit einem Nachlauf zwischen einer vertikalen Achse (durch die Lenksachse hindurch) in Richtung der Bodenoberfläche und dem Angriffspunkt des Vorderrades mit der Bodenoberfläche angeordnet ist, welcher Zug im Falle einer Ablenkung eine entgegengerichtete Drehkraft bewirkt.

## Revendications

1. Agencement pour motocyclettes qui, en association avec un braquage, nécessite une réduction de la force de braquage, dans lequel un guidon (1) est avancé de façon à être tourné autour d'un centre de rotation (25) au moyen d'une force de braquage et dans lequel un dispositif ou des dispositifs (9) d'amortissement qui sont actionnés par un milieu d'amortissement (37a) sont agencés de façon à absorber un mouvement qui est transmis au guidon en résultat d'une inégalité de la surface (55) sur laquelle la motocyclette est conduite, agencement étant agencé, au moyen d'une vanne hydraulique (19, 19'), pour amener le milieu d'amortissement (37a) à remplir une fonction d'asservissement qui réalise cette réduction, **caractérisé en ce que** la vanne hydraulique (19, 19') est fixée à partir d'une tête supérieure (5) de fourche au moyen d'un palier (23) agencé dans une pièce de montage (22) de palier ou dans un corps extérieur (58) de la vanne hydraulique, jusqu'à une pièce de montage inférieure (15) du guidon à laquelle l'autre extrémité de la vanne hydraulique est reliée.

2. Agencement selon la revendication 1, **caractérisé en ce que** l'axe longitudinal (24) de la vanne hydraulique (19) s'étend parallèlement à l'axe de rotation (25) et **en ce que** la vanne hydraulique est amenée à être tournée autour de son axe longitudinal après un mouvement de rotation initial prédéterminé (α) du guidon.

3. Agencement selon la revendication 1 ou 2, **caractérisé en ce que** le dispositif d'amortissement (9) se présente sous la forme d'un amortisseur à ailette, où une ailette (28) reliée à l'amortisseur à ailette (9) est reliée à un arbre (10) de palier qui a un centre de rotation qui coïncide ou coïncide essentiellement avec l'axe de rotation (25) de la roue avant (1) de la motocyclette.

4. Agencement selon l'une quelconque des revendications 1 à 3, **caractérisé en ce que** la pièce de montage (22) de palier supporte un dispositif (26, 26') à action contraire qui interagit avec un élément (27, 27') agencé dans la pièce inférieure de montage (15) du guidon, et **en ce que** le dispositif à action contraire et l'élément sont agencés pour déterminer l'amplitude (α) du mouvement initial.

5. Agencement selon l'une quelconque des revendications 1 à 4, **caractérisé en ce que** deux dispositifs de support (63a, 63b) se rejoignent à la tête de fourche supérieure (5) et à la pièce de montage inférieure (15) du guidon et des dispositifs ou broches (26) sont agencés entre ces dispositifs de support (63a, 63b) et la tête de fourche (5) ou la pièce de montage inférieure (15) du guidon, lesquels dispositifs ou broches (26) s'étendent vers le bas dans un dispositif (27) à action contraire qui est agencé dans une partie correspondante de la tête de fourche (5) ou dans la pièce de montage inférieure (15) du guidon d'une manière telle qu'une interaction de ces dispositifs détermine le mouvement de rotation initial (α) du guidon (16).

6. Agencement selon l'une quelconque des revendications 1 à 5, **caractérisé en ce que,** dans le cas d'une position de déviation allant au-delà d'une position initiale pour la liaison de la fonction d'asservissement, la vanne hydraulique (19) est agencée pour déconnecter complètement ou partiellement la fonction d'amortissement du dispositif d'amortissement.

7. Motocyclette pourvue d'un agencement selon l'une quelconque des revendications 1 à 6, la motocyclette étant **caractérisée en ce qu'**elle est agencée pour une transmission combinée aux roues arrière et avant avec un effort entre un axe vertical (passant par l'axe de braquage) dans une direction orientée vers la surface du sol et le point de contact de la roue avant avec la surface du sol, lequel effort engendre une force tournant en sens contraire dans le cas de la déviation.
